# EUROPÄISCHE PATENTSCHRIFT

(11) **EP 3 394 972 B1**
(45) Veröffentlichungstag und Bekanntmachung des Hinweises auf die Patenterteilung: **27.01.2021**
(21) Anmeldenummer: 16828708.4
(22) Anmeldetag: 21.12.2016
(51) Int. Cl.: H02M 3/02, H02M 3/158, H02M 3/155

(54) **GLEICHSTROMWANDLER**
DC/DC CONVERTER
CONVERTISSEUR CONTINU-CONTINU

(30) Priorität: 22.12.2015 DE 102015122567
(43) Veröffentlichungstag der Anmeldung: 31.10.2018
(60) Teilanmeldung: 20206098.4
(73) Patentinhaber: Novum engineerING GmbH, 01067 Dresden (DE)
(72) Erfinder: BIRTH, Sören, 01307 Dresden (DE)
(74) Vertreter: Ter Meer Steinmeister & Partner
(86) Internationale Anmeldenummer: PCT/DE2016/100608
(87) Internationale Veröffentlichungsnummer: WO 2017/108033

(56) Entgegenhaltungen:
- EP-A2- 0 534 422
- CN-A- 104 734 496
- US-A- 5 736 842
- US-A- 6 008 589
- US-A1- 2015 222 178
- US-B1- 6 341 076
- GARINTO D ED - ZELTSER I ET AL: "A New Zero-Ripple Boost Converter with Separate Inductors for Power Factor Correction", POWER ELECTRONICS SPECIALISTS CONFERENCE, 2007. PESC 2007. IEEE, IEEE, PISCATAWAY, NJ, USA, 17 June 2007 (2007-06-17), pages 1309-1313, XP031218474, ISBN: 978-1-4244-0654-8

## Beschreibung

Die Erfindung betrifft einen Gleichstromwandler, umfassend einen Eingang und einen Ausgang, einen zwischen dem Eingang und dem Ausgang angeordneten Längszweig, in welchem mindestens eine erste Induktivität und ein erster Kondensator angeordnet sind, und einen in einem ersten Querzweig am Ausgang angeordneten Kondensator sowie einen weiteren Querzweig mit unterschiedlichen Anordnungen einer zweiten Induktivität und zweier Schalter.

In vielen Bereichen der Technik ist es notwendig, eine zur Verfügung stehende Gleichspannung zu wandeln, um damit angeschlossene Verbraucher zu betreiben. Eine derartige Wandlung einer zur Verfügung stehenden sogenannten Eingangsspannung Ue kann beispielsweise mittels eines Gleichstromwandlers erfolgen, wobei der Gleichstromwandler eine Ausgangsspannung Ua für die angeschlossenen Verbraucher erzeugen kann, welche kleiner oder größer als die Eingangsspannung Ue ist.

Anwendung finden derartige Gleichstromwandler beispielsweise in Maschinen oder Anlagen in der Industrie, in einer Vielzahl elektronischer Geräte und im Fahrzeugbau. Beispielsweise in sogenannten Schaltnetzteilen, welche häufig in Computern, Nootbooks, Mobiltelefonen, HiFi-Geräten und kleinen Motoren eingesetzt werden, sind derartige Gleichstromwandler üblich.

Die Vorteile derartiger Wandler liegen in einem verbesserten Wirkungsgrad sowie in einer verringerten Wärmeentwicklung.

Zur Umformung der elektrischen Energie werden meist sogenannte getaktete Wandler als Gleichstromwandler eingesetzt, die mittels einem Steuersignal, welches den Takt der Umschaltung des im Wandler angeordneten, einzigen Schalters vorgibt, angesteuert werden. Üblicherweise werden in derartigen Wandlern ein oder mehrere passive elektrische Speicher, wie Kapazitäten und/oder Induktivitäten, angeordnet. Das Wirkprinzip bei der Wandlung einer Eingangsspannung in eine Ausgangsspannung ist ein gesteuertes zyklisches Laden und Entladen der passiven elektrischen Speicher.

An der Stelle eines im Gleichstromwandler notwendigen Schalters kommen beispielsweise aktive, elektrische Halbleiterschalter wie ein BJT (Bipolar Junction Transistor), ein MOSFET (Metal-Oxide-Semiconductor Field-Effect-Transistor) oder ein IGBT (Insulated-Gate Bipolar-Transistor) zum Einsatz.

Durch das zyklische Laden und Entladen der passiven elektrischen Speicher, wie Kapazitäten und/oder Induktivitäten, ergibt sich ein dreieckförmiger Strom- bzw. Spannungsverlauf am Eingang und/oder am Ausgang des Leistungsstellers. Dieser Effekt wird auch als Ripple bezeichnet und stellt einen Wechselstrom mit einer beliebigen Frequenz und Kurvenform dar, welcher einem Gleichstrom überlagert ist. Verwendet wird auch der Begriff eines pulsierenden Gleichstroms.

Diese auftretenden hochfrequenten Ripple erzeugen Oberschwingungen, welche Störungen in weiteren angeschlossenen elektronischen Baugruppen verursachen. Um diese elektromagnetischen Störfelder zu beschränken, wird im Allgemeinen versucht, die Ripple durch größere oder zusätzlich eingesetzte Bauelemente zu bedämpfen. Derartige Ansätze finden sich in "A 'Zero'Ripple Technique Applicable To Any DC Converter" David C. Hamill, Surrey Space Centre, University of Surrey, Guildford, UK, d.hamill@surrey.ac.uk und in Ripple Steering AC-DC Converters to Minimize Input Filter Eric CHOU, Frank CHEN, Claudio Adragna, Bruce LU.

Weiterhin existieren Ideen, die Ripple durch aktive zusätzliche Quellen zu reduzieren, wie in Techniques for Input Ripple Current Cancellation: Classification and Implementation, N.K. Poon, J.C.P. Liu, C.K. Tse and M.H. Pong dargestellt. Alternativ sind auch Modifikationen mit gekoppelten Induktivitäten aus AN3180, Application note, A 200 W ripple-free input current PFC pre-regulator with theL6563S, ©2010 STMicroelectronics bekannt, um die Störungen zu minimieren.

Die US 6 341 076 B1 offenbart einen Gleichspannungswandler und insbesondere eine aktive Überspannungsschutzschaltung, ein Betriebsverfahren und einen Leistungswandler, der diesen verwendet und insbesondere einen pulsbreitenmodulierten Gleichspannungswandler, der Leistung von einer Eingangsgleichspannungsquelle verarbeitet und Leistung an eine Last durch eine induktive Energiespeicherkomponente liefert, die alternativ mit der Eingangsgleichstromquelle und der Last über elektronische Halbleiterschalter verbunden ist.

In der US 2015/222178 A1 ist ein Spannungswandler zum Umwandeln einer von einer Stromversorgung gelieferten Eingangsspannung in eine Ausgangsspannung offenbart, welcher eine induktive Komponente, eine Primär- und Sekundärwicklungen, einen Ausgangskondensator zum Zuführen von Energie zu einer Last über einen Ausgangsknoten und einen AC-Koppelkondensator sowie einen Gleichrichter zum Gleichrichten der Ausgangsspannung und einen Schalter zum periodischen Umschalten umfasst.

Die US 6 008 589 A offenbart einen Wechselstrom-Wechselrichter mit einem Schalter zum Ansteuern von Wechselstromlasten, die besonders für Anwendungen mit Gasentladungslampen geeignet sind, basierend auf der Integration von automatischen Stromwandlern und Wandlern, die einem Klasse-E-Wandler ähneln, wobei beide Teile einen einzigen aktiven Schalter teilen.

Aus der CN 104 734 496 A ist ein SEPIC-Feed-Buck-Boost-Wandler bekannt, der eine SEPIC-Schaltung, eine Polaritätsinversionsumwandlungsschaltung und eine Steuerung aufweist, die miteinander gekoppelt sind. Die SEPIC-Schaltung ist mit einer Stromquelle verbunden. Die SEPIC-Schaltung und die Polaritätsinversionsumwandlungsschaltung sind über einen Steuerschalter verbunden. Eine Umkehrschaltung für die Polaritätsumkehrung ist mit einer Last verbunden. Wenn der Steuerschalter SISBB geschlossen ist, speichert die SPPIC-Schaltung die elektrische Energie der Energiequelle in einer energiespeichernden gekoppelten Induktivität der SEPIC-Schaltung und der Polaritätsinversionsumwandlungsschaltung. Währenddessen koppelt ein an einen Energiespeicher gekoppelter Kondensator elektrische Energie durch die Polaritätsinversionsumwandlungsschaltung an die Last zurück. Wenn der Steuerschalter ausgeschaltet ist, speist die Stromquelle über die SEPIC-Schaltung elektrische Energie an die Last zurück und elektrische Energie wird durch die energiespeichergekoppelte Induktivität der SEPIC-Schaltung und die Polaritätsinversionsumwandlungsschaltung durch die Spannungsquelle an die Last zurückgespeist.

D. Garinto: "A New Zero-Ripple Boost Converter with Separate Inductors for Power Factor Correction", 2007 IEEE Power Electronics Specialists Conference, ISBN 978-1-4244-0654-8, beschreibt eine Schaltungstopologie mit zwei separaten Induktivitäten, zwei Kapazitäten, einem Schalter und einer Diode.

EP 0534422 A2 beschreibt eine Stromversorgungsvorrichtung, bei der eine erste Induktivität in Reihe geschaltet ist zwischen einem Konverterschaltkreis und einem Eingang, wobei eine zweite Induktivität zwischen dem Konverterschaltkreis und Masse angeschlossen ist. Der Konverterschaltkreis ist aus einem Schaltelement, einem Kondensator und einer Diode aufgebaut.

US 5736842 A beschreibt eine Technik zum Verringern von Verlusten in Hochspannungs-Hochleistungskonvertern.

Die Aufgabe der Erfindung besteht darin, einen Gleichstromwandler anzugeben, welcher einfach und preiswert herstellbar ist und dessen, einem Gleichstrom überlagerter, Wechselstromanteil in einer Ausgangsspannung (Rippel) vermindert ist.

Die Aufgabe wird durch einen Gegenstand mit den Merkmalen gemäß Patentanspruch 1 gelöst. Weiterbildungen sind in dem abhängigen Patentanspruch angegeben.

Vorgesehen ist es, den Gleichstromwandler derart auszuführen, dass in einem Längszweig mindestens eine Induktivität und eine Kapazität angeordnet sind. In einem ausgangsseitigen Querzweig ist eine weitere Kapazität angeordnet. In einer zu diesem ausgangsseitigen Querzweig angeordneten Parallelschaltung werden in einer nicht zur Erfindung gehörenden ersten Variante zwei Schalter angeordnet, wobei ein Mittelabgriff zwischen diesen beiden Schaltern mit einem ersten Anschluss einer weiteren Induktivität verbunden ist. Der zweite Anschluss dieser Induktivität ist mit einem Punkt zwischen der im Längszweig angeordneten Induktivität und dem Kondensator verbunden.

In einer Ausführung des Gleichstromwandlers gemäß Anspruch 1 ist es vorgesehen, statt der beiden Schalter im weiteren Querzweig eine zweite Induktivität und einen zweiten Schalter anzuordnen, wobei ein dem zweiten Schalter abgewandter Anschluss der zweiten Induktivität direkt mit dem Ausgang verbunden ist. Der sich zwischen den beiden Bauelementen befindliche Punkt ist mit einem Anschluss eines ersten Schalters verbunden, dessen zweiter Anschluss mit einem Punkt zwischen der im Längszweig angeordneten ersten Induktivität und dem Kondensator verbunden ist.

Für die Schalter im Gleichstromwandler werden aktive Halbleiterschalter eingesetzt.

Diese aktiven Halbleiterschalter können beispielsweise ein BJT, ein MOSFET oder ein IGBT sein. Eine Beschränkung auf diese aufgezählten Halbleiterschalter ist nicht gegeben.

Weitere Einzelheiten, Merkmale und Vorteile von Ausgestaltungen der Erfindung ergeben sich aus der nachfolgenden Beschreibung von Ausführungsbeispielen mit Bezugnahme auf die zugehörigen Zeichnungen:
Fig. 1: einen Gleichstromwandler aus dem Stand der Technik (SEPIC-Wandler),
Fig. 2: eine erste, nicht zur Erfindung gehörende Realisierung des Gleichstromwandlers,
Fig. 3: eine zweite Realisierung des erfindungsgemäßen Gleichstromwandlers,
Fig. 4: eine dritte, nicht zur Erfindung gehörende Realisierung des Gleichstromwandlers,
Fig. 5: eine Anwendung des erfindungsgemäßen Gleichstromwandlers in einer Wechselstrombrücke und
Fig. 6: eine grafische Darstellung ermittelter Ripple im Vergleich zwischen dem Stand der Technik und der Realisierung nach Figur 2.

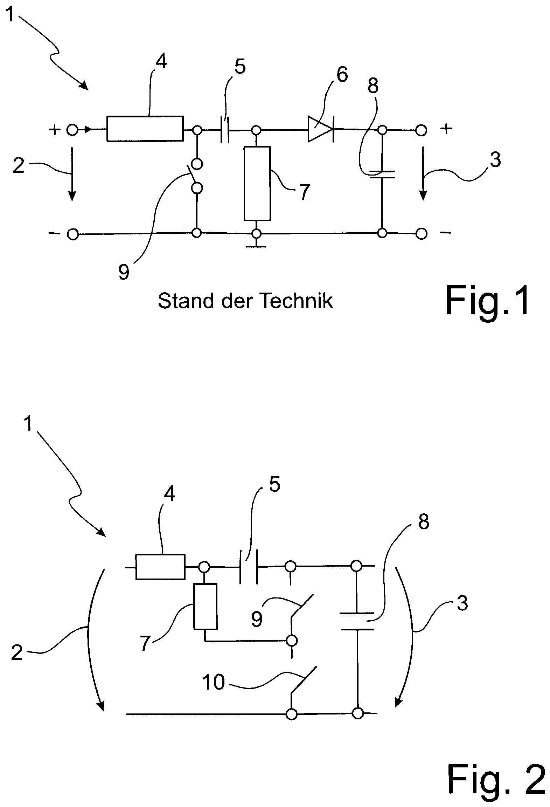

In der Figur 1 ist ein Gleichstromwandler 1 aus dem Stand der Technik dargestellt. Der gezeigte Gleichstromwandler 1 ist ein sogenannter SEPIC-Wandler (SEPIC - Single Ended Primary Inductance Converter), welcher stellvertretend aus der Menge der nicht galvanisch trennenden Wandler ausgewählt wurde, die mit 4 passiven Speichern, also beispielsweise zwei Kapazitäten und zwei Induktivitäten, aufgebaut werden. Dieser Gleichstromwandler hat die Eigenschaft, dass er sich derart betreiben lässt, dass die Ausgangsspannung kleiner oder größer als die Eingangsspannung sein kann.

Der Gleichstromwandler 1 hat einen Eingang 2, an welchen eine Eingangsspannung Ue angelegt werden kann, und einen Ausgang 3, an welchem eine Ausgangsspannung Ua vom Gleichstromwandler 1 gewandelt, bereitgestellt wird. Der Gleichstromwandler 1 kann eine Ausgangsspannung Ua bereitstellen, welche größer oder kleiner als die Eingangsspannung Ue sein kann.

Der Gleichstromwandler 1 weist in einem Längszweig eine erste Induktivität 4, eine erste Kapazität 5 sowie eine Diode 6 auf. In einem ausgangsseitigen Querzweig ist eine zweite Kapazität 8 parallel zu einem am Ausgang 3 angeschlossenen Lastwiderstand, welcher in der Figur 2 nicht dargestellt ist, angeordnet. In einem weiteren Querzweig, zwischen der ersten Kapazität 5 und der Diode 6, ist eine zweite Induktivität 7 angeordnet. Zwischen der ersten Induktivität 4 und der ersten Kapazität 5 ist ebenfalls in einem dritten Querzweig ein erster Schalter 9 angeordnet.

Wird bei dem in der Figur 1 dargestellten Gleichstromwandler 1 der Schalter 9 geschlossen, so liegt an der ersten Induktivität 4 die Eingangsspannung an. Gleichzeitig liegt an der ersten Kapazität 5 eine Spannung an, welche von ihrem Wert der Eingangsspannung am Eingang 2 entspricht. Der durch die erste und die zweite Induktivität 4 und 7 fließende Strom steigt an, wobei Energie in den Induktivitäten 4 und 7 gespeichert wird.

Zu diesem Zeitpunkt liefert die ausgangsseitig angeordnete zweite Kapazität 8 den Ausgangsstrom für eine angeschlossene Last oder einen Verbraucher, da die Diode 6 gesperrt ist. Wird der Schalter 9 geöffnet, kehrt sich die Polarität der Spannungen an der ersten und der zweiten Induktivität 4 und 7 um. Die Diode 6 schaltet durch und leitet die gespeicherte Energie zur zweiten Kapazität 8 und somit auch zur angeschlossenen Last.

In der Figur 2 ist eine nicht zur Erfindung gehörende erste Realisierung des Gleichstromwandlers 1 gezeigt. Der Gleichstromwandler 1 weist in seinem Längszweig, zwischen seinem Eingang 2 und seinem Ausgang 3, mindestens eine erste Induktivität 4 und eine erste Kapazität 5 auf. In einem ausgangsseitigen Querzweig ist eine zweite Kapazität 8 angeordnet, welche parallel zu einer nicht dargestellten Last am Ausgang 3 geschaltet ist.

Ebenfalls parallel zum Ausgang 3 und der zweiten Kapazität 8 sind ein erster Schalter 9 und ein zweiter Schalter 10 in Reihe geschaltet angeordnet. Eine zweite Induktivität 7 ist zwischen der ersten Induktivität 4 und der ersten Kapazität 5 und einem Anschluss zwischen den in Reihe geschalteten Schaltern 9 und 10 angeordnet.

Vorzugsweise sind die Schalter 9 und 10 als aktive Halbleiterschalter ausgeführt. Zum Einsatz kommen beispielsweise BJT (Bipolar Junction Transistor), MOSFET (Metal-Oxide-Semiconductor Field-Effect Transistor), IGBT (Insulated-Gate Bipolar Transistor) oder andere.

Vorgesehen ist es, die Schalter mittels eines von einer zentralen Steuerung, welche in der Figur 2 nicht dargestellt ist, erzeugten Steuersignals anzusteuern. Die zentrale Steuerung stellt die Steuersignale für die mechanischen oder elektronischen Schalter 9 und 10 derart bereit, dass die Schalter 9 und 10 wechselseitig angesteuert werden. Somit ist der Schalter 9 geschlossen, wenn der Schalter 10 geöffnet ist und umgekehrt.

In der in der Figur 2 dargestellten Schaltungsanordnung ist die Richtung des Stromflusses abhängig von einem gewählten Tastverhältnis der Ansteuersignale der Schalter 9 und 10 sowie von den am Eingang 2 und am Ausgang 3 anliegenden Spannungen Ue und Ua.

Die Schalter 9 und 10 können mit dem Verfahren der Zustandsraummittlung sowie einer speziellen Form des Zero-Voltage-Switching, bei dem der Schwingkreis parallel zum Schalter liegt und aktiv von einem zusätzlichen Schaltimpuls zum Schwingen angeregt wird, angesteuert werden.

Der Gleichstromwandler 1 in der Figur 2 kann aus einer am Eingang 2 anliegenden Eingangsspannung Ue eine größere am Ausgang 3 ausgegebene Ausgangsspannung Ua erzeugen. Bei einem derartigen Gleichstromwandler 1 ergibt sich der verminderte Ripple, also ein verringerter pulsierender Gleichstrom, am Eingang 2. Der Eingang kann mit dem Ausgang getauscht und dadurch die Funktionsweise umgekehrt werden. Wird am Ausgang 3 eine Eingangsspannung Ue angelegt und der Gleichstromwandler 1 entsprechend angesteuert, so wird am Eingang 2 eine Ausgangsspannung Ua ausgegeben, welche beispielsweise kleiner als Ue ist.

Für den Fall, dass die Funktionsweise des Gleichstromwandlers umgedreht wird, ergibt sich der verminderte Rippel nicht mehr eingangsseitig des Wandlers sondern ausgangsseitig.

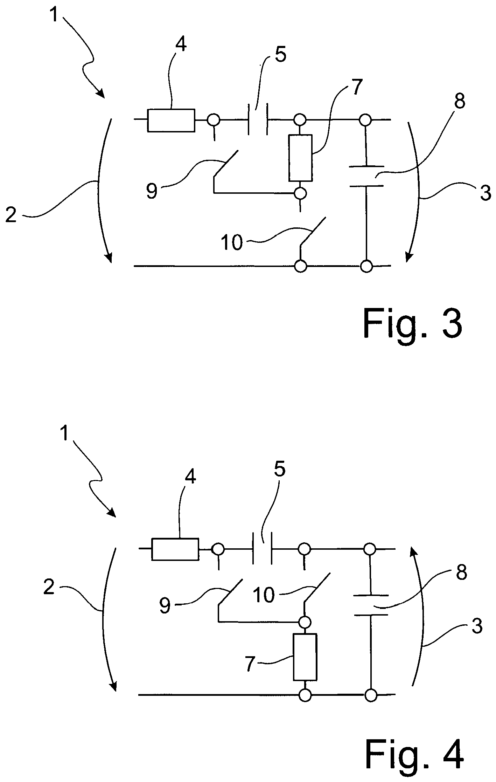

In der Figur 3 ist eine zweite Realisierung des Gleichstromwandlers 1 dargestellt, bei der es sich um eine erfindungsgemäße Realisierung des Gleichstromwandlers 1 handelt. Der Gleichstromwandler 1 weist in seinem Längszweig, zwischen seinem Eingang 2 und seinem Ausgang 3, mindestens eine erste Induktivität 4 und eine erste Kapazität 5 auf. In einem ausgangsseitigen Querzweig ist eine zweite Kapazität 8 angeordnet, welche parallel zu einer nicht dargestellten Last am Ausgang 3 geschaltet ist.

Ebenfalls parallel zum Ausgang 3 und der zweiten Kapazität 8 sind eine zweite Induktivität 7 und ein zweiter Schalter 10 in Reihe geschaltet angeordnet. Ein erster Schalter 9 ist zwischen der ersten Induktivität 4 und der ersten Kapazität 5 und einem Anschluss zwischen der zweiten Induktivität 7 und dem ersten Schalter 9 angeordnet.

In der Figur 4 ist eine dritte Realisierung des Gleichstromwandlers 1 dargestellt, die nicht zur Erfindung gehört. Der Gleichstromwandler 1 weist in seinem Längszweig, zwischen seinem Eingang 2 und seinem Ausgang 3, mindestens eine erste Induktivität 4 und eine erste Kapazität 5 auf. In einem ausgangsseitigen Querzweig ist eine zweite Kapazität 8 angeordnet, welche parallel zu einer nicht dargestellten Last am Ausgang 3 geschaltet ist.

Ebenfalls parallel zum Ausgang 3 und der zweiten Kapazität 8 sind ein zweiter Schalter 10 und eine zweite Induktivität 7 in Reihe geschaltet angeordnet. Ein zweiter Schalter 9 ist zwischen der ersten Induktivität 4 und der ersten Kapazität 5 und einem Anschluss zwischen den in Reihe geschalteten Elementen Schalter 10 und zweite Induktivität 7 angeordnet.

Bei dem in der Figur 4 gezeigten Gleichstromwandler 1 kehrt sich die Polarität der Spannung am Ausgang 3 um.

Die Schalter 9 und 10 können mit dem Verfahren der Zustandsraummittlung sowie einer speziellen Form des Zero-Voltage-Switching, bei dem der Schwingkreis parallel zum Schalter liegt und aktiv von einem zusätzlichen Schaltimpuls zum Schwingen angeregt wird, angesteuert werden.

Für den Fall, dass an der Stelle der Schalter 9 und/oder 10 ein aktiver Halbleiterschalter, wie beispielsweise eine IGBT oder ein MOSFET, zum Einsatz kommen, bilden diese Schalter 9 und/oder 10 in einem Zustand, in welchem der Schalter 9 und/oder 10 nicht durchgesteuert ist oder sind, eine Diode. Diese Diode ermöglicht einen gerichteten Stromfluss. Im Fall eines Durchsteuerns eines oder beider Schalter 9 und/oder 10 weisen die Halbleiterschalter einen sehr niedrigen Übergangswiderstand auf und ermöglichen einen Stromfluss in eine beliebige Richtung.

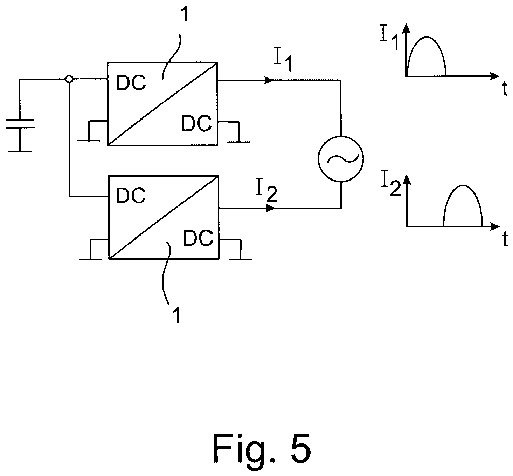

In der Figur 5 ist eine Anwendung des Gleichstromwandlers 1 in einer Wechselstrombrücke gezeigt. Zur Erzeugung einer beispielsweise für einen Verbraucher, wie einen Motor, benötigten, sinusförmigen Wechselspannung, werden zwei Gleichstromwandler 1 genutzt. Eine Spannungsquelle wird mit den Eingängen beider Gleichstromwandler 1 eingangsseitig verbunden. Mittels entsprechender Steuersignale für die Schalter 9 und 10 in den Gleichstromwandlern 1 erzeugt der obere in der Figur 5 dargestellte Gleichstromwandler 1 eine positive Halbwelle. Dies ist in der Figur 5 in einem kleinen Diagramm mit einem Strom-ZeitVerlauf für den Strom I1 dargestellt. Die negative Halbwelle wird mittels des unteren Gleichstromwandlers 1 erzeugt. Der zugehörige Verlauf des Stromes I2 ist ebenfalls in einem kleinen Diagramm dargestellt.

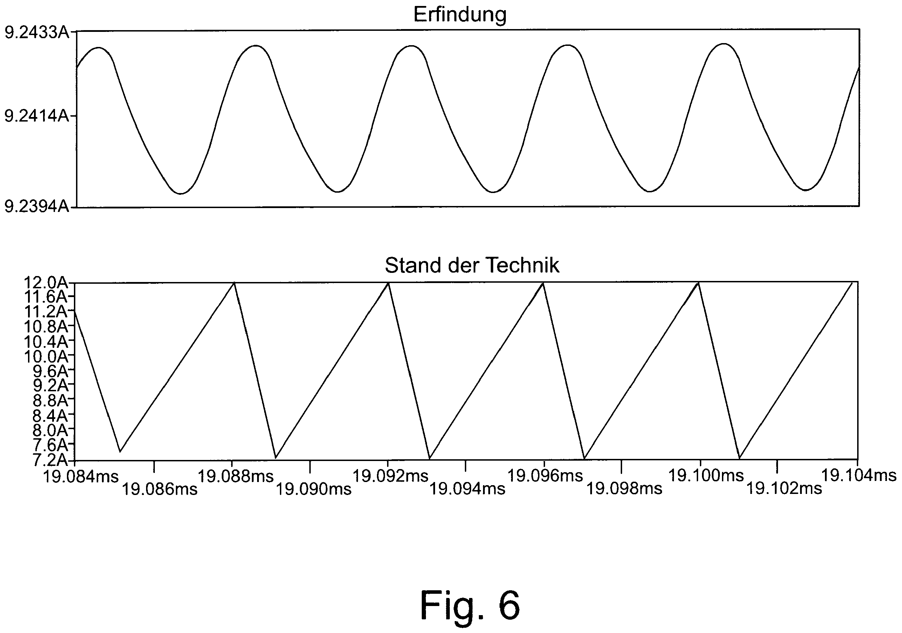

Bei einer Gegenüberstellung eines Gleichstromwandlers 1 nach der Figur 2 im Vergleich mit einem aus dem Stand der Technik bekannten SEPIC-Wandler wurde nachgewiesen, dass der störende Rippel stark reduziert werden konnte. Wie in der Figur 6 auszugsweise dargestellt ist, ergaben die Vergleichsmessungen, dass der SEPIC-Wandler, dargestellt im unteren Bereich des Strom-Zeit-Verlaufs, Rippelströme im Bereich von etwa 4 A aufwies, während der Wandler nach der Figur 2, dargestellt im oberen Bereich des Strom-Zeit-Verlaufs, mit seinem Rippelstrom im Bereich von etwa 4 mA lag. Somit konnte der Rippel stark minimiert werden.

Die Erfindung kann in vielen Bereichen der Umformung von elektrischer Energie eingesetzt werden, wie beispielsweise bei der
- uni- oder bidirektionalen Gleichstromwandlung,
- Erweiterung der Gleichstromvariante zur Wechselstrombrücke,
- Impedanzspektroskopie von Energiequellen (Rippelarm),
- Ansteuerung von Elektromotoren oder der
- Batterieladung in Batteriemanagementsystemen.

Eine beispielhafte Anwendung der Erfindung bei der Impedanzspektroskopie soll nachfolgend beschrieben werden.

Die charakteristische Impedanz einer elektrochemischen Energiequelle, wie einem Akkumulator oder einer Brennstoffzelle, gibt Aufschluss über die inneren Zustände der Quelle. Um die Impedanz zu messen, wird die Quelle entweder mit einem gezielten Störstrom beaufschlagt und die Spannungsantwort gemessen, oder mit einer Störspannung überlagert, wobei die Reaktion des Stromes erfasst wird. In beiden Fällen ist diesem gezielten Störsignal der Ripplestrom, bzw. eine Ripplespannung überlagert. Durch die dargestellte Erfindung kann die Beeinflussung durch den Ripplestrom erheblich reduziert werden, sodass eine wesentlich verbesserte, kaum von Störungen verfälschte Impedanzmessung möglich wird.

Ein Vorteil des erfindungsgemäßen Gleichstromwandlers liegt in einer Reduzierung der Ripple ohne einen Einsatz von zusätzlichen, größeren oder andersartigen Bauelementen in der Gleichstromwandlerschaltung. Ein weiterer Vorteil liegt darin, dass die im Gleichstromwandler eingesetzten Bauelemente keinen speziellen Dimensionierungsvorschriften unterliegen.

### Bezugszeichenliste

1 Gleichstromwandler
2 Eingang
3 Ausgang
4 erste Induktivität
5 erste Kapazität, Kondensator
6 Diode
7 zweite Induktivität
8 zweite Kapazität, Kondensator
9 erster Schalter
10 zweiter Schalter

## Patentansprüche

1. Gleichstromwandler, umfassend einen Eingang (2) und einen Ausgang (3), einen zwischen dem Eingang (2) und dem Ausgang (3) angeordneten Längszweig, in welchem eine erste Induktivität (4) und eine erste Kapazität (5) angeordnet sind, und einen in einem ersten Querzweig am Ausgang (3) angeordneten Kondensator (8), **dadurch gekennzeichnet, dass** in einem parallel zum ersten Querzweig angeordneten zweiten Querzweig eine zweite Induktivität (7) und ein zweiter aktiver Halbleiterschalter (10) in einer Reihenschaltung angeordnet sind, wobei ein dem zweiten aktiven Halbleiterschalter (10) abgewandter Anschluss der zweiten Induktivität (7) direkt mit dem Ausgang (3) verbunden ist, und dass ein erster aktiver Halbleiterschalter (9) derart angeordnet ist, dass sein erster Anschluss mit einem Punkt zwischen der zweiten Induktivität (7) und dem zweiten aktiven Halbleiterschalter (10) und sein zweiter Anschluss mit einem Punkt zwischen der ersten Induktivität (4) und der ersten Kapazität (5) verbunden ist.

2. Gleichstromwandler nach Anspruch 1, **dadurch gekennzeichnet, dass** der erste und der zweite aktive Halbleiterschalter (9, 10) ein BJT, MOSFET oder IGBT sind.

## Claims

1. A DC/DC converter comprising an input (2) and an output (3), a longitudinal arm arranged between the input (2) and the output (3) in which a first inductor (4) and a first capacitor (5) are arranged, and a capacitor (8) arranged in a first shunt arm at the output (3), **characterized in that** a second inductor (7) and a second active semiconductor switch (10) connected in series are arranged in a second shunt arm in parallel with the first shunt arm, wherein a terminal of the second inductor (7) facing away from the second active semiconductor switch (10) is directly connected to the output (3), and that a first active semiconductor switch (9) is arranged in such a way that its first terminal is connected to a point between the second inductor (7) and the second active semiconductor switch (10) and its second terminal is connected to a point between the first inductor (4) and the first capacitor (5).

2. The DC-to-DC converter according to claim 1, **characterized in that** the first and second active semiconductor switches (9, 10) are a BJT, a MOSFET or an IGBT.

## Revendications

1. Convertisseur de courant continu, comportant une entrée (2) et une sortie (3), une branche longitudinale agencée entre l'entrée (2) et la sortie (3), dans laquelle une première inductance (4) et une première capacité (5) sont agencées, et un premier condensateur (8) agencé sur la sortie (3) dans une première branche transversale, **caractérisé en ce qu'**une seconde inductance (7) et un second commutateur à semi-conducteur actif (10) sont agencés en série dans une seconde branche transversale agencée parallèlement à la première branche transversale, dans lequel une borne de la seconde inductance (7) opposée au second commutateur à semi-conducteur actif (10) est directement reliée à la sortie (3), et **en ce qu'**un premier commutateur à semi-conducteur actif (9) est agencé de sorte que sa première borne est reliée à un point situé entre la seconde inductance (7) et le second commutateur à semi-conducteur actif (10), et sa seconde borne est reliée à un point situé entre la première inductance (4) et la première capacité (5).

2. Convertisseur de courant continu selon la revendication 1, **caractérisé en ce que** les premier et second commutateurs à semi-conducteur actif (9, 10) sont un transistor bipolaire à jonctions (BJT), un transistor à effet de champ à semi-conducteur d'oxyde métallique (MOSFET) ou un transistor bipolaire à grille isolée (IGBT).
